# EUROPÄISCHE PATENTSCHRIFT

(11) **EP 2 249 150 B1**
(45) Veröffentlichungstag und Bekanntmachung des Hinweises auf die Patenterteilung: **07.09.2011**
(21) Anmeldenummer: 10004617.6
(22) Anmeldetag: 03.05.2010
(51) Int. Cl.: G01N 29/02

(54) **Einrichtung zum Messen von Stoffkonzentrationen in wässrigen Lösungen auf Basis eines Hydrogel-Schwingquarzsensors**
Device for measuring substance concentrations in aqueous solutions based on a hydrogel quartz crystal sensor
Dispositif de mesure de la concentration des agents dans des solutions aqueuses basé sur un résonateur à quartz d'hydrogel

(30) Priorität: 08.05.2009 DE 202009007108 U
(43) Veröffentlichungstag der Anmeldung: 10.11.2010
(73) Patentinhaber: SITA Messtechnik GmbH, 01217 Dresden (DE)
(72) Erfinder: Schulze, Lothar, Prof.-Ing., 01139 Dresden (DE); Haberland, Ralf, Dr. Ing., 01257 Dresden (DE); Schümann, Daniel, 01099 Dresden (DE); Gross, Daniel, 01187 Dresden (DE)
(74) Vertreter: Ilberg, Roland

(56) Entgegenhaltungen:
- US-A- 4 562 725
- US-A- 6 156 578
- SHIGERU KUROSAWA ET AL: "Immunosensors using a quartz crystal microbalance; Immunosensors using a quartz crystal microbalance" MEASUREMENT SCIENCE AND TECHNOLOGY, IOP, BRISTOL, GB, Bd. 14, Nr. 11, 1. November 2003 (2003-11-01), Seiten 1882-1887, XP020064908 ISSN: 0957-0233 DOI: 10.1088/0957-0233/14/11/005
- CAO Z ET AL: "Fabrication and properties of thermosensitive organic/inorganic hybrid hydrogel thin films" LANGMUIR, AMERICAN CHEMICAL SOCIETY US, Bd. 24, Nr. 10, 20. Mai 2008 (2008-05-20), Seiten 5543-5551, XP002596823 DOI: DOI:10.1021/LA8000653
- IRWIN, E.F. ET AL.: "Analysis of Interpenetrating Polymer Networks via Quartz Crystal Microbalance with Dissipation Monitoring" LANGMUIR,AMERICAN CHEMICAL SOCIETY US, Bd. 21, 5. Juni 2005 (2005-06-05), Seiten 5529-5536, XP002596824
- FALT S ET AL: "Swelling of model films of cellulose having different charge densities and comparison to the swelling behavior of corresponding fibers" LANGMUIR, Bd. 19, Nr. 19, 16. September 2003 (2003-09-16), Seiten 7895-7903, XP002596825 DOI: DOI:10.1021/LA026984I

## Beschreibung

### Anwendungsgebiet der Erfindung

Die Erfindung betrifft eine Einrichtung zum Messen von Stoffkonzentrationen in wässrigen Lösungen auf Basis eines Hydrogelsensors. Bevorzugte Anwendung findet die Erfindung bei der Kontrolle von Prozesslösungen der wässrigen Reinigung oder der Beschichtung von Oberflächen. Solche Prozesslösungen bestehen beispielsweise aus in Wasser gelösten Metallen und deren Salzen, Säuren und Basen sowie organischen Zusatzstoffen wie Alkohole und Amine sowie Tenside. Weitere Anwendungen sind Stoff- und Rezepturentwicklungen, chemische Experimente oder Qualitätskontrollen in Laboren.

### Stand der Technik

Als übliches Verfahren zur Bestimmung von Stoffkonzentrationen in Lösungen ist beispielsweise die Titration in Laboren zur Qualitätskontrolle etabliert. Zur Durchführung dieses Experimentierverfahrens werden Titrierlösungen als Verbrauchsmaterial verwandt (DE 100 49 300 C1, DE 10 2006 009 816 A1) .

Ein anderes Verfahren zur Bestimmung der Konzentration von Komponentenlösungen beruht auf der Messung der Kapazität oder Impedanz einer durch Umkehrosmose im festen Verhältnis veränderten Probe (DE 10 2007 045 203 A1).

In der DE 199 11 447 C2 wird ein weiterer Verfahrensweg zum analytischen Ermitteln der Konzentration von Zusatzstoffen in galvanischen Metallabscheidebädern beschrieben. Zur Ermittlung der Menge des auf einer Arbeitselektrode abgeschiedenen Metalls wird ein mit einer geeigneten Schwingungserregerschaltung gekoppelter Schwingquarz mit einer Elektrodenfläche als Arbeitselektrode verwendet, wobei die Frequenzänderung beim Abscheiden und/ oder beim Auflösen des Metalls gemessen wird. Mit einem solchen Verfahren lassen sich zwar Abscheidungsprozesse kontrollieren, aber keine Konzentrationen gelöster Stoffe oder Ionenkonzentrationen in Flüssigkeiten unmittelbar messen und ausgeben.

In der DE 19828093 C2 wird eine Einrichtung zum Bestimmen von Bestandteilen einer ein- oder mehrkomponentigen Lösung angegeben, die das Quellverhalten mindestens eines auf die Bestimmungsgröße sensiblen oder sensibilisierten Polymernetzwerks auswertet und ausgibt. Auch in DE 101 29 985 C2, DE 101 29 986 C2, DE 101 29 987 C2, DE 10 2006 027 051 B4 und DE 10 2006 037 420 B4 wird das Quellverhalten von Hydrogel-Volumenkörpern zur Deformation von mechano-elektrischen Wandlern benutzt. Eine messtechnische Verarbeitung der Hydrogelsensorsignale wird nicht angegeben.

SHIGERU KUROSAWA ET AL: "Immunosensors using a quartz crystal microbalance"; MEASUREMENT SCIENCE AND TECHNOLOGY, IOP, BRISOL, GB, Bd. 14, Nr. 11, 1. November 2003 (2003-11-01), Seiten 1882-1887, XP020064908 ISSN: 0957-0233 DO1: 10.1088/ 0233/14/11/00 offenbart eine Einrichtung geeignet zum Messen der Frequenz und Phasenlage einer Quarzkristall-Mikrowaage, deren Quarzkristall mit einem Polystyrol beschichtet ist, an welches sich Analyten anlagern können. Die Einrichtung weist eine baulich kompakte, autarke Messeinheit auf, umfassend ein Gehäuse mit mindestens einem fest oder löslich mit dem Gehäuse verbundenen Sensorkopf, der mindestens einen Sensor aufweist, der den polystyrolbeschichteten Schwingquarz trägt, einem im Gehäuse angeordneten und den polystyrolbeschichteten Schwingquarz anregenden Oszillator, einer im Gehäuse angeordneten Verarbeitungs- und Speicherelektronik für eine Messsignalverarbeitung, für einen vorinstallierten Programmablauf sowie für Kalibrieralgorithmen, einem im Gehäuse angeordneten Display zur direkten Messwertausgabe, im Gehäuse angeordneten Bedienungselementen und einer im Gehäuse untergebrachten Stromversorgung. Die Einrichtung verfügt über keinen hydrogelbeschichteten Sensor und ist nicht geeignet, Stoffkonzentrationen in wässrigen Lösungen direkt zu messen und auszugeben.

In: CAO Z ET AL: "Fabrication an properties of thermosensitive organic/inorganic/hybrid hydrogelt hin films" LANGMUIR, AMERICAN CHEMICAL SOCIETY US, Bd. 24, Nr. 10. 20. Mai 2008 (2008-05-20), Seiten 5543-5551, DOI: DOI:10.1021/ LA8000653 wird die Temperaturabhängigkeit des Quellverhaltens eines Hydrogels mit Hilfe einer Quarzkristall-Mikrowaage analysiert, indem deren Schwingverhalten beobachtet wird.

Gemäß US 6 156 578 A (TOM GLENN M [US] 5. Dezember 2000 (2000-12-05) wird mit einer Quarzkristall-Mikrowaage eine Gaskomponente in einem mehrkomponentigen Gasstrom bei Abwesenheit von Wasser detektiert. Der Quarzkristall trägt keine Hydrogelschicht.

Aus US 4 562 725 A (OKA SHOTARO [JP] ET AL) 7. Januar 1986 (1986-01-07) ist ein Feuchtesensor für Gas bekannt, basierend auf einer Polymer-beschichteten Quarzkristall-Mikrowaage. Das Messen der Konzentration eines Stoffes in einer Flüssigkeit ist nicht offenbart.

In: IRWIN, E. F. ET AL: "Analysis of Interpenetrating Polymer Networks via Quartz Crystal Microbalance with Dissipation Monitoring "LANGMUIR, AMERICAN CHEMICAL SOCIETY US, Bd. 21, 5. Juni 2005 (2005-06-05), Seiten 5529-5536 werden die Frequenz und der Phasengang einer Polymer-beschichteten Quarzkristall-Mikrowaage untersucht. Ein Messgerät zur Messung von Stoffkonzentrationen in einer Lösung ist nicht beschrieben.

Nach FALT S ET AL: "Swelling of model films of cellulose having different charge densities and comparison to the swelling behavior of correspondending fibers" LANGMUIR, Bd. 19, Nr. 19, 16. September 2003 (2003-09-16), Seiten 7895-7903, DOI: DOI: 10.1021/LA0269841 werden Frequenz und Phasengang einer Zellulose-beschichteten Quarzkristall-Mikrowaage untersucht, um das Quellverhalten von Zellulose für die Papierherstellung bei verschiedenen Salzkonzentrationen zu untersuchen. Ein Messgerät zum Messen der Stoffkonzentration in einer Lösung ist nicht angegeben.

In wässrigen Lösungen quellfähige polymere Netzwerke, auch und im Weiteren Hydrogele genannt, besitzen die Eigenschaft, ohne weitere Chemikalien ihre mechanischen Eigenschaften signifikant zu verändern, wenn sich die Zusammensetzung ihres Quellmittels schon in geringem Maße ändert.

Die DE 19848878 A1 beschreibt ein Verfahren, wonach die Auswertung der physikalischen Eigenschaften eines Hydrogels, wie Masseänderung und/ oder Änderung der Festigkeit, Steifigkeit, des Elastizitäts- oder Schubmoduls, durch einen mechanischen Schwinger erfolgt und ein elektrisches Signal generiert wird, welches mit einer oder mehreren physikalischen Größen der Probeflüssigkeit korreliert. Hierzu ist beispielsweise ein auf seiner Resonanzfrequenz über Elektroden elektrisch angeregter Quarzresonator mit einer dünnen sensitiven Hydrogelschicht als eigentliches messgrößenempfindliches Element beschichtet. Vollführt diese Schicht infolge der Einwirkung der als Messgröße fungierenden physikalischen Größe einer ein- oder mehrkomponentigen Flüssigkeit eine Eigenschaftsänderung, bewirkt sie eine Frequenzänderung der Schwinganordnung, die elektronisch erfasst und verarbeitet werden kann. Die messtechnische Verarbeitung der Sensorsignale ist ebenfalls nicht angegeben.

DE 101 25 124 A1 offenbart ein integriertes miniaturisiertes chemisches Labor mit hydrogelbeschichteten piezoelektrischen Schwingquarzen für den Nachweis gasförmiger oder flüssiger Reaktionsprodukte. Die messtechnische Verarbeitung der Sensorsignale ist auch hier nicht angegeben.

Aus DE 10 2004 041 595 A1 ist eine Messzelle mit einem Schwingquarz bekannt, auf dem ein Ligant immobilisiert ist, der einen Analyten eines Prüfmediums spezifisch binden kann. Ein Hydrogel wird nicht verwendet.

### Technisches Problem

Die Messung, Überwachung und Beeinflussung der Stoffkonzentration von Lösungen setzt die Kenntnis einer physikalischen Führungsgröße wie der Konzentration voraus. Die bekannten Hydrogel-Sensoren sind zwar geeignet, ein elektrisches Signal zur Verfügung zu stellen, dies allein ist allerdings nicht hinreichend für eine prozessnahe Messung und direkte Ausgabe einer Ionen- oder Stoffkonzentration. Auch sind aus dem Stand der Technik keine kompakten, alle neben einem oder mehreren Hydrogelsensoren notwendigen Komponenten enthaltende, einfach zu bedienende Messeinrichtungen zum direkten Messen und Ausgeben der Konzentration, insbesondere zur online/ inline-Messung als z.B. Anlagenkomponente bekannt.

### Aufgabe der Erfindung

Der Erfindung liegt die technische Aufgabe zu Grunde, Sensoren auf der Basis hydrogelbeschichteter piezoelektrischer Schwingquarze technisch weiterzuentwickeln und so in einer Messeinrichtung zu integrieren und ihre elektrischen Signale rechentechnisch auszuwerten, dass eine kompakte, autark arbeitende, einfach zu handhabende Messeinrichtung entsteht, die für das direkte Messen der Stoffkonzentrationen von wässrigen Lösungen mobil oder als feste Komponente einer industriellen prozesslösungstechnischen Anlage eingesetzt werden kann. Dabei soll die Messeinrichtung besonders zuverlässig und wartungsarm sein sowie dazu geeignet, auch unterschiedliche wässrige Lösungen auszumessen.

### Offenbarung der Erfindung

Die Aufgabe wird erfingdungsgemäß durch die Merkmale des Anspruchs 1 gelöst. Vorteilhafte Ausgestaltungen und Ausprägungen geben die begleitenden Unteransprüche an.

Erfindungsgemäß wird danach eine baulich kompakte, autarke Messeinrichtung geschaffen, welche Signale eines oder mehrerer an sich bekannter Hydrogelsensoren mittels zuvor erstellter applikationsspezifischer Schwingfrequenz-Konzentrations-Kennlinien so verknüpft, dass die Stoffkonzentrationen wässriger Lösungen durch das Gerät direkt als Wert ausgegeben werden. Dazu enthalten die Sensorköpfe jeweils einen elektronischen Speicher, der den Zusammenhang zwischen dem Hydrogelsensorsignal und einer Probenkonzentration als Kennlinie oder Tabelle enthält.

Mit der erfindungsgemäßen Messeinrichtung lässt sich die Konzentration von in Wasser gelösten Prozesschemikalien direkt messen, d.h. als Konzentrationswert ausgeben. Die Messeinrichtung enthält in ihrem Gehäuse eine Elektronik zur Ansteuerung mindestens eines Hydrogelsensors, zum Programmablauf, wie Kalibrierung, Messung und Reinigung, zur Auswertung der Hydrogelsensorsignale, zur Speicherung und zur Ausgabe der Messwerte nebst der erforderlichen Stromversorgung.

Für eine Kommunikation mit einem übergeordneten Leitsystem oder mit einem PC sind eine oder mehrere Schnittstellen vorhanden, die eine Steuerung der Messeinrichtung und das Übertragen von Messwerten ermöglichen. Beispiele hierfür sind USB, RS232, RS484, Ethernet, Profibus usw.. Auch die direkte Ansteuerung von Lösungsbehandlungseinrichtungen, Temperiereinrichtungen oder Lichtsignalanzeigen ist möglich.

Um aus den Hydrogelsensorsignalen Konzentrationsmesswerte zu berechnen, nutzt die Messeinrichtung einen in die Sensorköpfe integrierten Speicher, der die applikationsspezifischen Schwingfrequenz-Konzentrations-Kennlinien enthält. Dabei ist der Speicherinhalt variabel, d.h. die Kennlinien sind jederzeit modifizierbar.

Die Messeinrichtung ist mit mindestens einem Sensorkopf versehen, der jeweils mindestens einen Hydrogelsensor enthält. Der Sensorkopf kann lösbar in Form beispielsweise einer Steck- oder Schraubverbindung sowie optional jeweils mit einer Zuleitung ausgeführt sein. Die lösbare Ausführung erlaubt einen einfachen Austausch des Sensorkopfes.

Jeder dieser Hydrogelsensoren ist mit einem hydrogelbeschichteten Schwingquarz ausgestattet und besteht im Weiteren aus einem Halter, Abdichtungen, elektrischer Kontaktierung des Schwingquarzes und einer Leiterplatte. Die Leiterplatte trägt Bauelemente zur elektrischen Anpassung des Schwingquarzes an den Oszillator, einen Speicher für die applikationsspezifischen Schwingfrequenz-Konzentrations-Kennlinien sowie einen Temperaturfühler. Vorteilhaft ist ein Halter für einen Schwingquarz, der eine lösbare elektrische Verbindung z.B. durch Anpressen eines Kontaktelementes realisiert. Der Halter ist einfach zu öffnen, z.B. durch eine Schraub- oder Snap-Verbindung.

Der Halter ist so ausgeführt, dass der Schwingquarz sehr nah an der Oberfläche des Halters liegt, um Bereiche zu minimieren, die nicht optimal von der Prozesslösung erreicht werden. Dazu ist die Abdichtung zwischen dem hydrogelbeschichteten Schwingquarz und dem Halter von minimaler Dicke und die umfassende Wandstärke des Halters im Bereich der Öffnung minimal. Vorzugsweise wird der Schwingquarz in der Prozesslösung vertikal ausgerichtet benutzt, um das Ablagern von Gasblasen oder Sinkstoffen zu reduzieren.

Die Messeinrichtung hat typischerweise ein industriegeeignetes Design, gekennzeichnet durch ein robustes Gehäuse und einen hohen IP-Schutzgrad sowie entsprechende optionale Befestigungselemente wie Laschen oder (Gewinde-)Bohrungen. Für die flexible Nutzung der Messeinrichtung ist ein Design in Form eines Handmessgerätes mit Bedienungselementen und einem Display als Nutzerschnittstellen vorteilhaft.

Weiterhin kann der Halter durch eine Abdeckung erweitert werden, die mindestens einen Anschluss für den Zufluss und optional einen Anschluss für den Abfluss von Prozesslösung besitzt. Selbstverständlich kann der Halter selbst auch geschlossen ausgeführt sein und mindestens einen Anschluss für den Zufluss und optional einen Anschluss für den Abfluss von Prozesslösung besitzen.

Durch den auf der Leiterplatte intergrierten Speicher ist der Sensorkopf einfach wechselbar. Durch weitere hierin gespeicherte Parameter ist auch eine automatische Erkennung des Hydrogelsensortyps oder der Hydrogelsensornummer durch das Messgerät möglich, womit eine spezifische Verarbeitung der Hydrogelsensorsignale durch die Messeinrichtung erfolgen kann. Die Kennung kann auch mechanisch, elektrisch oder elektronisch realisiert werden.

Die Schwingquarze sind mit einem Hydrogel beschichtet, welches vorzugsweise als sehr dünne Schicht im Bereich einer Trockenschichtdicke von ca. 100 nm ... 200 nm ausgeführt ist. Dadurch werden eine hohe Güte des Schwingsystems, eine hohe Empfindlichkeit der Hydrogelsensoren sowie kurze Ansprechzeiten realisiert. Langwieriges Spülen oder andere Maßnahmen zum Einstellen eines Gleichgewichts im Hydrogel können damit entfallen.

Mit der Messeinrichtung sind optional ein oder mehrere Sensoren für weitere Messgrößen, wie z.B. ein Temperaturfühler, verbunden. Diese können fest am Gerät installiert, lösbar in Form einer Steck- oder Schraubverbindung sowie optional jeweils mit einer Zuleitung ausgeführt sein. Die lösbare Ausführung erlaubt einen einfachen Austausch des jeweiligen Sensors.

Sensoren für weitere Messgrößen können auch jeweils in die Sensorköpfe integriert sein. So kann ein Temperaturfühler aus dem Gehäuse des Sensorkopfes herausragen oder im Inneren des Sensorkopfes an einer dünnen Gehäuseinnenwand montiert sein.

### Ausführungsbeispiel

Die Erfindung soll an Hand eines Ausführungsbeispiels näher erläutert werden. In den zugehörigen Zeichnungen zeigen:
- Fig. 1: ein Prinzipbild einer erfindungsgemäßen Messein- richtung,
- Fig. 2: ein Handmessgerät,
- Fig. 3: einen Sensorkopf,
- Fig. 4: Varianten eines Sensorkopfes,
- Fig. 5: einen hydrogelbeschichteten Schwingquarz,
- Fig. 6: ein Blockschaltbild zur Elektronik und
- Fig. 7: eine Schwingfrequenz-Konzentrations-Kennlinie für ein Hydrogel PVA/PAS und eine Prozesslösung NaCl.

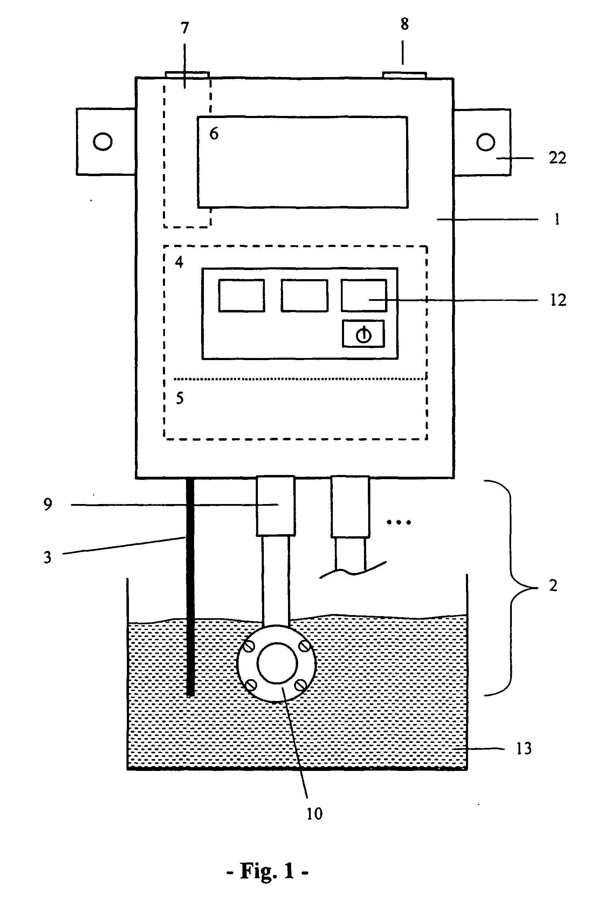

Der in Fig. 1 gezeigte prinzipielle Aufbau einer Messeinrichtung zeigt ein Gehäuse 1, an welchem ein Sensorkopf 2 fest oder lösbar angeschlossen ist. Weiterhin ist ein stabförmiger Temperaturfühler 3 an das Gehäuse 1 angeschlossen. Der Anschluss sonstiger Messgrößenaufnehmer ist optional. Innerhalb des Gehäuses 1 ist eine Verarbeitungs- und Speicherelektronik 4 für eine programmgesteuerte Messsignalverarbeitung sowie eine Oszillatorschaltung 5 und ein Display 6 für eine direkte Messwertausgabe der zu messenden und ggf. zu pflegenden Konzentration einer Lösung in zum Beispiel Prozent (Vol- oder Masse-%) untergebracht. In einem Programmspeicher der Verarbeitungs- und Speicherelektronik 4 sind Verarbeitungsalgorithmen implementiert. Ferner können in einem Datenspeicher der Verarbeitungs- und Speicherelektronik 4 die Messdaten sowie die Messung oder die Messeinrichtung betreffende Parameter gespeichert werden. Mit den Messdaten des Temperaturfühlers 3 kann die Verarbeitungs- und Speicherelektronik 4 die Messdaten der Hydrogelsensoren auf eine Bezugstemperatur kompensieren, bevor sie über eine Kommunikationsschnittstelle wie das Display 6 oder die Schnittstelle 8 ausgegeben oder im Datenspeicher der Verarbeitungs- und Speicherelektronik 4 gespeichert werden.

Die Messeinrichtung wird ferner von einer Stromversorgung 7 gespeist. Die Stromversorgung 7 kann an eine externe Stromzufuhr angeschlossen sein oder aus einem integrierten Energiespeicher gespeist werden, welcher eine Batterie oder ein wiederaufladbarer Akkumulator sein kann. Die Messeinrichtung enthält weiterhin eine Schnittstelle 8 zu einem PC oder einer speicherprogrammierbaren Steuerung (SPS) und hier nicht näher spezifizierte Bedienungselemente 12. Die Schnittstelle 8 kann als USB, RS232, RS484, Ethernet, Profibus usw. ausgeführt sein.

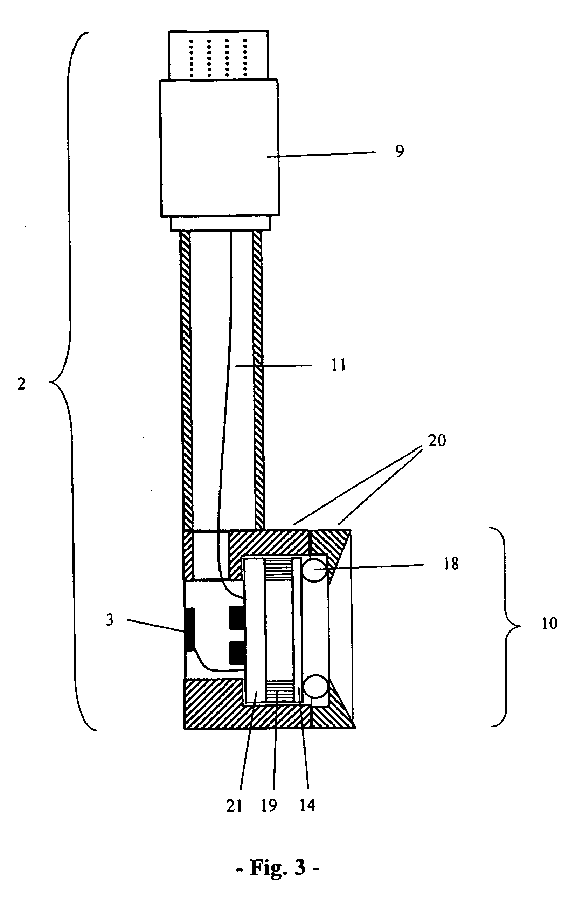

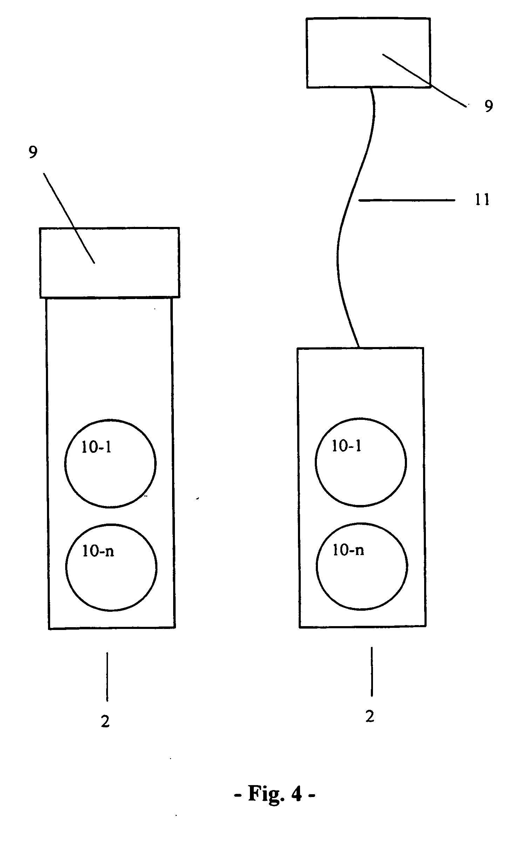

Der Sensorkopf 2 besitzt eine lösbare mechanische und elektrische Verbindung 9 zum Gehäuse 1 der Messeinrichtung. Im Sensorkopf 2 sind ein oder mehrere (Fig. 4) wechselbare Hydrogelsensoren 10 untergebracht. Die Schraub-, Steck-, Schnapp- oder Bajonettverbindung 9 zwischen dem Gehäuse 1 der Messeinrichtung und dem Sensorkopf 2 ist entweder direkt und damit starr oder flexibel mittels einer entsprechenden Zuleitung 11 (Fig. 4) zum Gehäuse 1. Rein schematisch ist in Fig. 1 dargestellt, dass mit dem Gehäuse 1 in einer Variante der Messeinrichtung mehrere Sensorköpfe 2 verbunden werden oder sein können, insbesondere Sensorköpfe 2 mit jeweils einem für die Messung einer vorbestimmten Lösungskomponente in einer Lösung ertüchtigten Hydrogelsensor 10 oder mit mehreren Hydrogelsensoren 10 in einem Sensorkopf 2 (Fig. 4) für die Messung mehrerer Lösungskomponenten. Dabei verarbeitet die Verarbeitungs- und Speicherelektronik 4 mit einem prozesslösungsspezifischen Modell die Messdaten verschiedener Hydrogelsensoren 10 derart kombiniert, dass auch in Mehrkomponentenlösungen oder Rezepturen die Konzentration der einzelnen Lösungsbestandteile eindeutig ermittelt werden kann. Die dazu erforderlichen prozesslösungsspezifischen Modelle können in einem Speicher der Verarbeitungs- und Speicherelektronik 4 oder im Speicher der Leiterplatte 21 (Fig. 3) der Hydrogelsensoren 10 hinterlegt werden.

Die Verbindungen 9 zwischen dem Gehäuse 1 und lösbaren Sensorköpfen 2 sind so hergerichtet, dass mechanisch, elektrisch oder elektronisch automatisch von der Messeinrichtung erkannt wird, was für ein Sensorkopf 2 und damit Hydrogelsensortyp an das Gehäuse 1 angeschlossen ist. Entsprechend verarbeitet die Verarbeitungs- und Speicherelektronik 4 innerhalb des Gehäuses 2 die vom Hydrogelsensor 10 eingehenden Messsignale. Die Verarbeitungs- und Speicherelektronik 4 ist auch in der Lage, Betriebsparameter der Hydrogelsensoren zu überwachen und bei Abweichungen von vorgegebenen Sollparametern eine Information über das Display 6 oder die Schnittstelle 8 auszugeben. Die Messeinrichtung arbeitet dadurch besonders zuverlässig.

Die Messeinrichtung kann beispielsweise im Online- oder Offline-Betrieb ein industrielles Prozessbad überwachen, wobei die Badlösung über einen Bypass zugeführt wird oder sich einfach in einem Gefäß 13 befindet.

Alternativ kann ein Sensorkopf 2 gegen eine Öffnung einer Wandung eines Prozessbehälters gerichtet montiert sein oder in einem Prozessmedium eingetaucht sein.

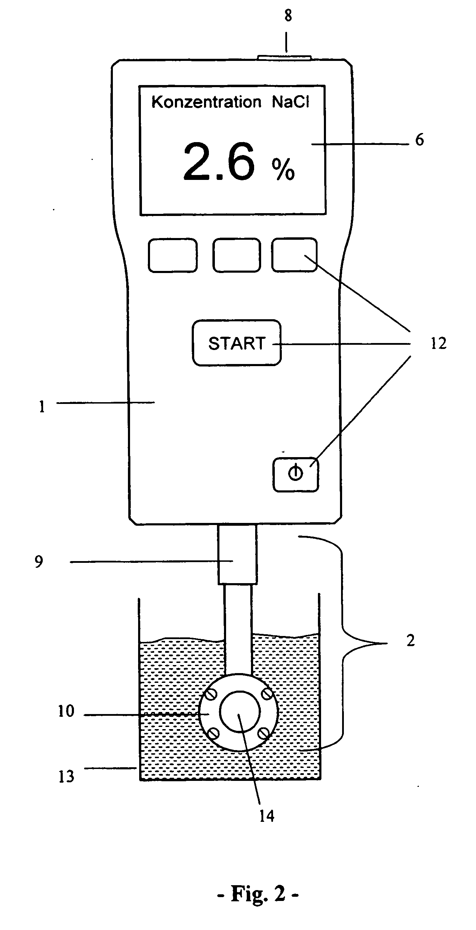

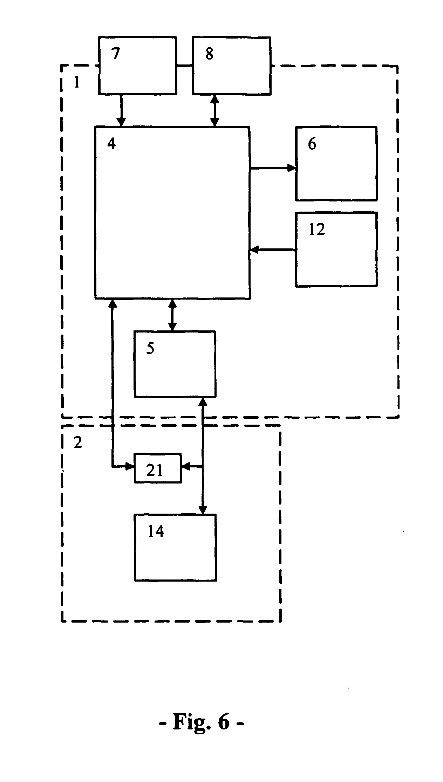

Fig. 2 zeigt eine Ausführung der Messeinrichtung als Handmessgerät, z. B. für einen Laboreinsatz. Funktionsgleiche Bauteile sind mit zu Fig. 1 identischen Bezugszeichen versehen. Das Gehäuse 1 der Messeinrichtung ist so kompakt, dass sie mit einer Hand zu halten und zu bedienen ist. Alternativ kann eine Stativhalterung verwendet werden. Zur Bedienung sind Bedienelemente 12 vorgesehen, im Beispiel Drucktasten. Mit ihnen wird die Messeinrichtung EIN und AUS geschaltet, es lassen sich Einstellungen für Mess-, Kalibrier- und Reinigungsmodi vornehmen und der Datenspeicher der internen Verarbeitungs- und Speicherelektronik 4 (Fig. 6) verwalten sowie allgemeine Geräteeinstellungen wie die des Displaykontrastes u.ä. vornehmen.

Zwecks Messung einer in dem Gefäß 13 befindlichen Prozesslösung werden der Sensorkopf 2 mit dem integrierten, hier nicht näher dargestellten Temperaturfühler 3 bei eingeschalteter Messeinrichtung für einige Sekunden in die Prozesslösung getaucht. Die Messvorrichtung "weiB" aufgrund der Kennung des angeschlossenen Hydrogelsensortyps, was gemessen werden soll und gibt die Konzentration auf dem Display 6 direkt als Wert aus. Im Anschluss wird der Sensorkopf 2 in ein Wasserbad getaucht und kurz gespült, worauf er sofort wieder verwendet werden kann. Dazu kann ein Reinigungsmodus z.B. vorgeben, den Sensorkopf 2 in eine Spülflüssigkeit zu tauchen, eine bestimmte Zeit abzuwarten oder eine Drift zu ermitteln und anschließend das Reinigungsergebnis ausgeben. Der Sensorkopf 2 kann aber auch ungespült andere Konzentrationen derselben Lösung messen.

Obwohl der hydrogelbeschichtete Schwingquarz 14 eine hohe Lebensdauer besitzt, lässt er sich bei Bedarf leicht gegen einen neuen Schwingquarz 14 auswechseln. Dies kann auch dann erfolgen, wenn die Konzentration einer Lösung mit anderen Bestandteilen gemessen werden soll und nur ein Sensorkopf 2 zur Verfügung steht.

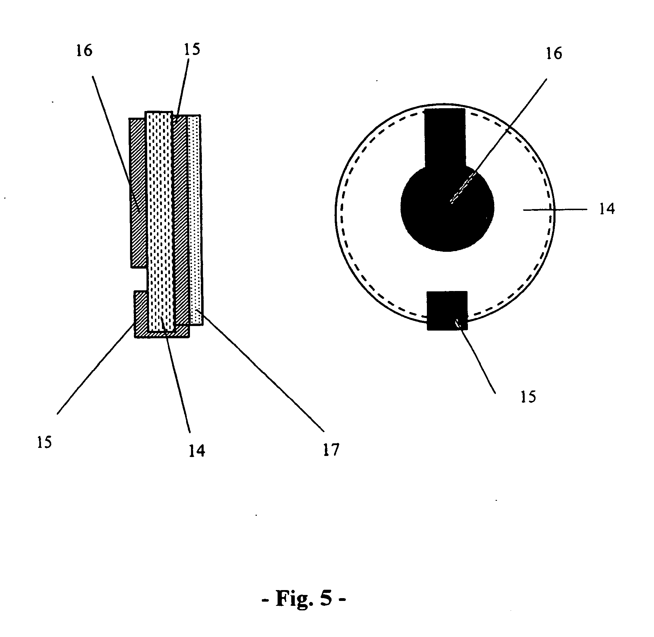

In Fig. 3 ist ein einzelner Sensorkopf 2 schematisch und beispielhaft dargestellt. Kernstück des Hydrogelsensors 10 im Sensorkopf 2 ist der dünne kreisrunde Schwingquarz 14, der von der Oszillatorschaltung 5 (Fig. 1) angeregt und ausgewertet wird. Auf jeder Oberflächenseite des Schwingquarzes 14 ist eine Goldelektrode 15, 16 (Fig. 5) aufgedampft. Eine der Elektroden 15 nimmt eine Oberfläche des Schwingquarzes 14 ein und ist mit einer extrem dünnen Hydrogelschicht 17 (Fig. 5) von 100 nm ... 200 nm Trockenschichtdicke belegt. Von Vorteil für die Temperaturstabilität des Schwingquarzes 14 ist es, wenn der Schwingquarz ein AT- geschnittener Quarz ist. Auf der Hydrogelseite spannt ein einfacher O-Ring 18 und auf der anderen Seite ein segmentierter Leitgummiring 19 den hydrogelbeschichteten Schwingquarz 14. Über den Leitgummiring 19 kontaktieren die Elektroden 15, 16 (Fig. 5) die Leiterbahnen einer Leiterplatte 21. Auf der Leiterplatte 21 ist eine Schaltung realisiert, die dazu dient, eine elektrische Anpassung des Schwingquarzes 14 an die Oszillatorschaltung 5 vorzunehmen. Beispielsweise kann dies eine elektrische Induktivität sein. Weiterhin sind auf der Leiterplatte 21 der Temperaturfühler 3 sowie ein nicht näher bezeichneter Speicher angeordnet, der die Schwingfrequenz-Konzentrations-Kennlinien und allgemeine Sensordaten wie Sensornummer, Einsatzdauer o. ä. enthält. Von der Leiterplatte 21 führt eine flexible elektrische Zuleitung 11 zur Verbindung 9, mit der der Sensorkopf 2 an das Gehäuse 1 anschließt.

Vorteilhaft ist der hydrogelbeschichtete Schwingquarz 14 senkrecht orientiert, wodurch eventuell anhaftende Luftbläschen und mögliche Schwebeteilchen sich nicht anlagern, sondern durch Auftrieb ablösen.

Aufgrund der geringen Dicke der Hydrogelschicht 17 spricht der Hydrogelsensor 10 rasch an.

Jeder Hydrogelsensor 10 wird auslieferseitig für die Messung einer ganz bestimmten in Wasser gelösten Substanz eingestellt. Dazu wird ein bestimmtes Hydrogel, welches auf einen bestimmten Lösungsbestandteil sensibel ist oder sensibilisiert wurde, auf den Schwingquarz 14 aufgebracht. So ist z.B. das bekannte Hydrogel Polyvenylalkohol/ Polyacrylsäure (PVA/ PAS) auf Salzkonzentrationen sensibel.

Fig. 4 zeigt schematisch zwei verschiedene Ausprägungen von Sensorköpfen 2, die direkt zum einen über eine Verbindung 9 und zum anderen über die Zuleitung 11 und eine Verbindung 9 an das Gehäuse 1 der Messeinrichtung angeschlossen werden können. Jeder dieser Sensorköpfe 2 kann einen oder mehrere Hydrogelsensoren 10 tragen.

Fig. 5 zeigt den beschichteten Schwingquarz 14 detailliert. Um die Kontaktierung des Schwingquarzes 14 von nur einer Seite aus vornehmen zu können, ist die Elektrode 15 bis auf die Gegenseite herumgeführt, die mit der Elektrode 16 versehen ist. Die Elektrode 15 trägt die Hydrogelschicht 17.

Fig. 6 zeigt ein Blockschaltbild der Messeinrichtung, die aus den Teilen Gehäuse 1 und Sensorkopf 2 besteht.

Die Verarbeitungs- und Speicherelektronik 4 sorgt für eine programmgesteuerte Messsignalverarbeitung, für die Steuerung und Auswertung der Oszillatorschaltung 5, für die direkte Ausgabe von Messwerten der zu messenden und ggf. zu pflegenden Konzentration einer Lösung in zum Beispiel Prozent (Volumen- oder Masse-%) und sonstiger Ausgaben über das Display 6. Im Programmspeicher der Verarbeitungs- und Speicherelektronik 4 sind dazu die erforderlichen Ablauf- und Verarbeitungsalgorithmen implementiert. Die Messeinrichtung wird ferner von der Stromversorgung 7 gespeist und kommuniziert über die Schnittstelle 8 zu einem PC oder einer SPS und wird über die hier nicht näher spezifizierte Bedienungselemente 12 bedient. Die Schnittstelle 8 kann als USB, RS232, RS484, Ethernet, Profibus usw. ausgeführt sein. Bestandteil der Oszillatorschaltung 5 ist der beschichtete Schwingquarz 14. Für eine elektrische Anpassung des Schwingquarzes 14 befinden sich auf der zwischen Oszillator 5 und Schwingquarz 14 wirkenden Leiterplatte 21 Bauelemente wie beispielsweise eine elektrische Induktivität.

Weiterhin sind auf der Leiterplatte 21 ein Temperaturfühler 3 sowie der nicht näher bezeichnete Speicher angeordnet, aus dem die Verarbeitungs- und Speicherelektronik 4 die Schwingfrequenz-Konzentrations-Kennlinien und allgemeine Sensordaten wie Sensornummer, Einsatzdauer o. ä. ausliest und ggf. ändert.

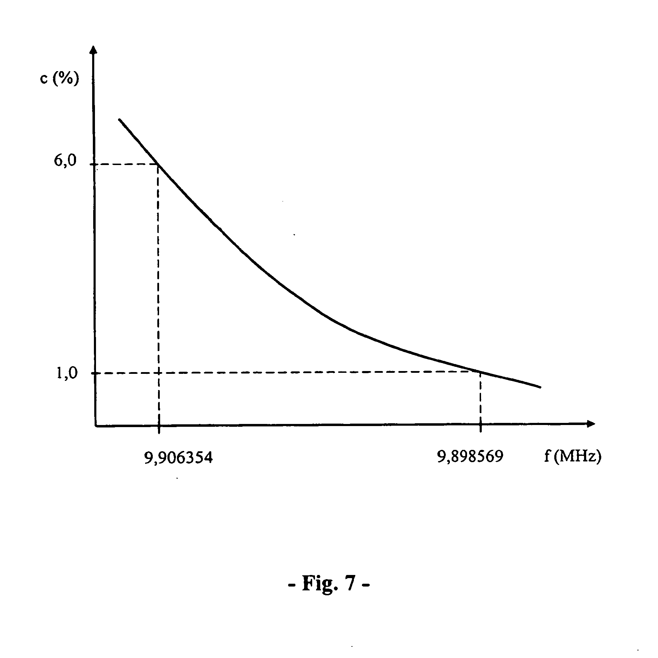

Schließlich ist beispielhaft in Fig. 7 eine typische Schwingfrequenz-Konzentrations-Kennlinie für das Hydrogel PVA/ PAS und eine Prozesslösung NaCl dargestellt. Mit zunehmender Salzkonzentration c quillt die Hydrogelschicht 17 (Fig. 5) weniger und steigt die Schwingfrequenz f des Schwingquarzes 14 (Fig. 5).

Die Kalibrierung der Sensoren erfolgt beispielsweise durch Ermitteln von Stützstellen der Schwingfrequenz-Konzentrations-Kennlinien. Dies kann auch der Programmablauf der Messeinrichtung bewerkstelligen. Z.B. kann die Messeinrichtung einen Algorithmus vorgeben, nach dem eine erforderliche Anzahl von Referenzproben angefordert wird, in die der Sensorkopf 2 zu tauchen ist. Mit diesen Stützstellen kann eine Schwingfrequenz-Konzentrations-Kennlinie ermittelt werden und im Speicher der Leiterplatte 21 der Sensorköpfe 2 abgelegt werden.

Für die Messeinrichtung werden für alle relevanten - anwenderseitig gewünschten - Messaufgaben nicht nur die betreffenden Hydrogelsensoren 10 bereitgestellt, sondern es sind in der Hydrogelsensorelektronik die betreffenden Schwingfrequenz-Konzentrations-Kennlinien hinterlegt oder lassen sich nachträglich implementieren.

Zum Messen einer Konzentration einer wässrigen Lösung verknüpft die Verarbeitungs- und Speicherelektronik 4 (Fig. 6) mittels eines Frequenzmessers (frequency counter) die Signale aus dem Hydrogelsensor 10 (Fig. 3) mit den Schwingfrequenz-Konzentrations-Kennlinien aus dem Speicher der Leiterplatte 21 zur Ausgabe der Konzentrationswerte in zum Beispiel Prozent auf dem Display 6 (Fig. 6).

### Bezugszeichen

- 1: Gehäuse
- 2: Sensorkopf
- 3: Temperaturfühler
- 4: Verarbeitungs- und Speicherelektronik
- 5: Oszillatorschaltung
- 6: Display
- 7: Stromversorgung
- 8: Schnittstelle zu einem PC oder einer SPS
- 9: Verbindung
- 10: Hydrogelsensor
- 11: Zuleitung
- 12: Bedienelemente
- 13: Gefäß mit Prozesslösung
- 14: Schwingquarz
- 15: Elektrode
- 16: Elektrode
- 17: Hydrogelschicht
- 18: O-Ring
- 19: Leitgummiring
- 20: Halter
- 21: Leiterplatte
- 22: Befestigungselement

## Patentansprüche

1. Einrichtung zum Messen von Stoffkonzentrationen in wässrigen Lösungen auf Basis eines Hydrogelsensors, aufweisend einen hydrogelbeschichteten piezoelektrischen Schwingquarz,
**gekennzeichnet durch**
eine baulich kompakte, autarke Messeinheit, umfassend ein Gehäuse (1) mit mindestens einem lösbar mit dem Gehäuse (1) verbundenen Sensorkopf (2), der mindestens einen Hydrogelsensor (10) aufweist, der den hydrogelbeschichteten Schwingquarz (14) trägt, einem im Gehäuse (1) angeordneten und den hydrogelbeschichteten Schwingquarz (14) anregenden Oszillator (5), einer im Gehäuse (1) angeordneten Verarbeitungs- und Speicherelektronik (4) einschließlich eines Frequenzmessers für eine Verarbeitung von Schwingfrequenzmesssignalen und deren Verknüpfung mit in einem internen Speicher des Sensorkopfs (2) abgelegten Schwingfrequenz-Konzentrationskennlinien zur Bestimmung von Stoffkonzentrationen in wässrigen Lösungen, für einen vorinstallierten Programmablauf sowie für Kalibrieralgorithmen, einem im Gehäuse (1) angeordneten Display (6) zur direkten Messwertausgabe, im Gehäuse (1) angeordneten Bedienungselementen (12), einer im Gehäuse (1) untergebrachten Stromversorgung (7) sowie einem am Gehäuse (1) oder im Sensorkopf (2) angeordneten Temperaturfühler (3) zum Messen der Temperatur der wässrigen Lösung, wobei der mindestens eine Sensorkopf (2) in Form einer Schraub-, Schnapp-, Steck- oder Bajonettverbindung (8) an der Messeinrichtung installiert ist und eine mechanische, elektrische oder elektronische Anschlusskennung bezüglich seines Übertragungsverhaltens aufweist.

2. Einrichtung nach Anspruch 1,
**dadurch gekennzeichnet,**
**dass** der mindestens eine Sensorkopf (2) über eine flexible Zuleitung (11) an der Messeinrichtung installiert ist.

3. Einrichtung nach mindestens einem der vorstehenden Ansprüche,
**dadurch gekennzeichnet,**
**dass** der Sensorkopf (2) einen oder mehrere wechselbare Hydrogelsensoren (10) trägt, welche ganz oder teilweise hydrogelbeschichtete piezoelektrische Schwingquarze (14) aufweisen.

4. Einrichtung nach mindestens einem der vorstehenden Ansprüche,
**dadurch gekennzeichnet,**
**dass** die hydrogelbeschichteten Schwingquarze (14) weit offen und nahe der Außenfläche des Sensorkopfs (2) in senkrechter Gebrauchslage angeordnet sind.

5. Einrichtung nach mindestens einem der vorstehenden Ansprüche,
**dadurch gekennzeichnet,**
**dass** im Sensorkopf (2) eine interne Elektronik zur Oszillatoranpassung angeordnet ist.

6. Einrichtung nach mindestens einem der vorstehenden Ansprüche,
**dadurch gekennzeichnet,**
**dass** jeder Hydrogelsensor (10) einen Halter (20) für einen hydrogelbeschichtenen Schwingquarz (14), Gummiabdichtungen (18, 19) beiderseits des Schwingquarzes (14), eine davon partiell leitfähig zur Kontaktierung seiner Elektroden (15, 16), aufweist.

7. Einrichtung nach mindestens einem der vorstehenden Ansprüche,
**dadurch gekennzeichnet,**
**dass** der Sensorkopf (2) hydrogelseitig verschließbar ist und eine Durchflusszelle mit Zu- und Abfluss für Prozesslösung ausbildet.

8. Einrichtung nach mindestens einem der vorstehenden Ansprüche,
**dadurch gekennzeichnet,**
**dass** die Einrichtung mit einer oder mehreren Schnittstellen (22) zu einer speicherprogrammierbaren Steuerung (SPS) oder einem PC und optional einer externen weiteren Stromversorgung (7) ausgeführt ist.

9. Einrichtung nach mindestens einem der vorstehenden Ansprüche,
**dadurch gekennzeichnet,**
**dass** die Verarbeitungs- und Speicherelektronik (4) einen Datenspeicher für die Messwerte der Messeinrichtung enthält.

10. Einrichtung nach mindestens einem der vorstehenden Ansprüche,
**dadurch gekennzeichnet,**
**dass** die Verarbeitungs- und Speicherelektronik (4) auf eine Temperaturkompensation der Messdaten der Hydrogelsensoren (10) mit den Messdaten eines Temperaturfühlers (3) eingerichtet ist.

11. Einrichtung nach mindestens einem der vorstehenden Ansprüche,
**dadurch gekennzeichnet,**
**dass** die Verarbeitungs- und Speicherelektronik (4) auf das Erkennen von die Zuverlässigkeit betreffenden kritischen Zuständen der Hydrogelsensoren (10) und die Ausgabe dieser Information über das Display (6) und/oder die Schnittstelle (8) der Messeinrichtung eingerichtet ist.

12. Einrichtung nach mindestens einem der vorstehenden Ansprüche,
**dadurch gekennzeichnet,**
**dass** die Verarbeitungs- und Speicherelektronik (4) Algorithmen zur verknüpften Auswertung von mehreren Hydrogelsensoren (10) zwecks des Messens von mehreren Stoffkonzentrationen in der gleichen Prozesslösung enthält.

13. Einrichtung nach mindestens einem der vorstehenden Ansprüche,
**dadurch gekennzeichnet,**
**dass** die Einrichtung ein baulich kompaktes, autarkes, robustes Gehäuse mit einem hohen IP-Schutzgrad besitzt.

14. Einrichtung nach mindestens einem der vorstehenden Ansprüche 1 - 12,
**dadurch gekennzeichnet,**
**dass** die Einrichtung als baulich kompaktes, autarkes, mobiles Handmessgerät ausgeführt ist.

## Claims

1. Device for measuring substance concentrations in aqueous solutions based on a hydrogel sensor, having a hydrogel coated piezoelectric quartz crystal oscillator,
**characterized in that**
a structurally compact stand-alone measuring unit comprising a housing (1) with at least one sensor head (2) detachably connected to the housing (1) and having at least one hydrogel sensor (10) and supporting the hydrogel coated quartz crystal oscillator (14), an oscillator (5) arranged in the housing (1) and exciting the hydrogel coated quartz crystal oscillator (14), a processing and storage electronics unit (4) including a frequency meter for processing oscillating frequency measurement signals and their linkage to oscillating frequency concentration characteristics backed up in an internal memory of the sensor head (2) for determining substance concentrations in aqueous solutions, for a preinstalled program sequence and for calibration algorithms, a display (6) arranged in the housing (1) for direct output of the measurement reading, controls (12) arranged in the housing (1), a power supply unit (7) accommodated in the housing (1), and a temperature sensor (3) mounted on the housing (1) or in the sensor head (2) for measuring the temperature of the aqueous solution whereby the at least one sensor head (2) is installed on the measurement device in the form of a screw joint, a snap-on fastener, a push-on connector or a bayonet joint (8) and having a mechanical, electrical or electronic terminal identification with respect to its transmission behavior.

2. Device according to claim 1,
**characterized in that**
the at least one sensor head (2) is installed on the measurement device by means of a flexible lead (11).

3. Device according to at least one of the above claims,
**characterized in that**
the sensor head (2) supports one or several exchangeable hydrogel sensor or sensors (10) having wholly or partly hydrogel coated piezoelectric quartz crystal oscillators (14).

4. Device according to at least one of the above claims,
**characterized in that**
the hydrogel coated quartz crystal oscillators (14) are arranged widely open and close to the external surface of the sensor head (2) in a perpendicular position of use.

5. Device according to at least one of the above claims,
**characterized in that**
an internal electronics unit for oscillator adjustment is arranged in the sensor head (2).

6. Device according to at least one of the above claims,
**characterized in that**
each hydrogel coated sensor (10) has a holder (20) for a hydrogel coated quartz crystal oscillator (14), rubber seals (18, 19) on either side of the quartz crystal oscillator (14) one of which is partially conductive for contacting its electrodes (15, 16).

7. Device according to at least one of the above claims,
**characterized in that**
the sensor head (2) is sealable on the hydrogel end and forms a flow cell with an inlet and an outlet for process solution.

8. Device according to at least one of the above claims,
**characterized in that**
the device is engineered with one interface or several interfaces (22) to a programmable logic controller (PLC) or a PC and optionally another external power supply unit (7).

9. Device according to at least one of the above claims,
**characterized in that**
the processing and storage electronics unit (4) includes a data storage device for the measurement readings of the device.

10. Device according to at least one of the above claims,
**characterized in that**
the processing and storage electronics unit (4) is geared to temperature compensation of the measurement data of the hydrogel sensors (10) with the measurement data of a temperature sensor (3).

11. Device according to at least one of the above claims,
**characterized in that**
the processing and storage electronics unit (4) is geared to detecting respective critical conditions of the hydrogel sensors (10) affecting reliability and to outputting these information via the display (6) and / or the interface (8) of the measurement device.

12. Device according to at least one of the above claims,
**characterized in that**
the processing and storage electronics unit (4) holds algorithms for the linked evaluation of several hydrogel sensors (10) for the purpose of measuring several substance concentrations in one and the same process solution.

13. Device according to at least one of the above claims,
**characterized in that**
the device has a structurally compact, stand-alone, rugged housing with a high IP protection rating.

14. Device according to at least one of the above claims,
**characterized in that**
the device is engineered as a structurally compact, stand-alone, mobile portable measuring instrument.

## Revendications

1. Dispositif de mesure de la concentration des agents dans des solutions aqueuses basé sur un détecteur à base d'hydrogel, comportant un résonateur à quartz piézoélectrique enduit d'hydrogel,
**caractérisé par**
une unité de mesure autarcique et compacte du point de vue constructif, comprenant un boîtier (1) avec au moins une tête de détection (2) liée de manière détachable au boîtier (1), comportant au moins un détecteur à base d'hydrogel (10) supportant le résonateur à quartz enduit d'hydrogel (14), un oscillateur (5) disposé dans le boîtier (1) et stimulant le résonateur à quartz enduit d'hydrogel (14), un système électronique de traitement et mémoire (4) disposé dans le boîtier (1) incluant un fréquencemètre pour un traitement de signaux de mesure de fréquences de résonance et leur liaison avec des courbes caractéristiques de concentration des fréquences de résonance déposées dans une mémoire interne de la tête de détection (2) pour la détermination de la concentration des agents dans des solutions aqueuses, pour un déroulement de programme préinstallé ainsi que pour des algorithmes de calibrage, un écran (6) disposé dans le boîtier (1) pour la visualisation directe des valeurs mesurés, des éléments de réglage (12) disposés dans le boîtier (1), une alimentation de courant (7) placée dans le boîtier (1) ainsi qu'une sonde de température (3) disposée dans le boîtier (1) ou dans la tête de détection (2) pour mesurer la température de la solution aqueuse, la au moins une tête de détection (2) étant installée dans le dispositif de mesure sous forme d'une liaison par vissage, encliquetage, emboitement ou baïonnette (8) et présentant une identification mécanique, électrique ou électronique de la ligne appelante en ce qui concerne son comportement de transmission.

2. Dispositif selon la revendication 1,
**caractérisé en ce que**
la au moins une tête de détection (2) est installée dans le dispositif de mesure au moyen d'une connexion flexible (11).

3. Dispositif selon au moins une des revendications précédentes,
**caractérisé en ce que**
la tête de détection (2) supporte un ou plus détecteurs à base d'hydrogel (10) changeables, qui comportent des résonateurs à quartz piézoélectrique entièrement ou partiellement enduits d'hydrogel (14).

4. Dispositif selon au moins une des revendications précédentes,
**caractérisé en ce que**
les résonateurs à quartz enduits d'hydrogel (14) sont arrangés de manière amplement ouverte et, près de la surface externe de la tête de détection (2), positionnés verticalement.

5. Dispositif selon au moins une des revendications précédentes,
**caractérisé en ce que**
dans la tête de détection (2) est arrangée une électronique interne pour l'ajustement de l'oscillateur.

6. Dispositif selon au moins une des revendications précédentes,
**caractérisé en ce que**
chaque détecteur à base d'hydrogel (10) comporte un support (20) pour un résonateur à quartz enduit d'hydrogel (14), et des joints en caoutchouc (18, 19) des deux côtés du résonateur à quartz (14), dont un est partiellement conducteur pour établir le contact avec ses électrodes (15, 16).

7. Dispositif selon au moins une des revendications précédentes,
**caractérisé en ce que**
la tête de détection (2) est obturable du côté de l'hydrogel et qu'elle forme une cellule d'écoulement avec entrée et sortie pour les solutions de processus.

8. Dispositif selon au moins une des revendications précédentes,
**caractérisé en ce que**
le dispositif est réalisé avec une ou plus interfaces (22) vers une commande par programme enregistré (SPS) ou vers un ordinateur et, de manière optionnelle, une alimentation de courant externe (7) supplémentaire.

9. Dispositif selon au moins une des revendications précédentes,
**caractérisé en ce que**
le système électronique de traitement et mémoire (4) comprend une mémoire de données pour les valeurs mesurées par le dispositif de mesure.

10. Dispositif selon au moins une des revendications précédentes,
**caractérisé en ce que**
le système électronique de traitement et mémoire (4) est équipé pour réaliser une compensation de température des données de mesure des détecteurs à base d'hydrogel (10) avec les données de mesure d'une sonde de température (3).

11. Dispositif selon au moins une des revendications précédentes,
**caractérisé en ce que**
le système électronique de traitement et mémoire (4) est équipé pour apercevoir des conditions critiques des détecteurs à base d'hydrogel (10) portant sur leur fiabilité et pour visualiser ces informations au moyen de l'écran (6) et/ou l'interface (8) du dispositif de mesure.

12. Dispositif selon au moins une des revendications précédentes,
**caractérisé en ce que**
le système électronique de traitement et mémoire (4) comprend des algorithmes pour l'évaluation connexe des résultats de plusieurs détecteurs à base d'hydrogel (10) afin de mesurer les concentrations de plusieurs agents dans la même solution de processus.

13. Dispositif selon au moins une des revendications précédentes,
**caractérisé en ce que**
le dispositif comprend un boîtier autarcique, robuste et compacte du point de vue constructif ayant un haut dégrée de protection IP.

14. Dispositif selon au moins une des revendications précédentes 1-12,
**caractérisé en ce que**
le dispositif est réalisé en tant qu'instrument de mesure manuelle autarcique, mobile et compacte du point de vue constructif.
